# EUROPÄISCHE PATENTSCHRIFT

(11) **EP 3 300 978 B1**
(45) Veröffentlichungstag und Bekanntmachung des Hinweises auf die Patenterteilung: **27.09.2023**
(21) Anmeldenummer: 17171201.1
(22) Anmeldetag: 16.05.2017
(51) Int. Cl.: B60W 40/00, B60W 40/064, B60W 40/068, B60W 50/08, B60W 40/10, B60W 50/14, B60R 21/00

(54) **LANDWIRTSCHAFTLICHE ARBEITSMASCHINE**
AGRICULTURAL WORK MACHINE
ENGIN AGRICOLE

(30) Priorität: 28.09.2016 DE 102016118283
(43) Veröffentlichungstag der Anmeldung: 04.04.2018
(73) Patentinhaber: CLAAS Tractor S.A.S., 78141 Vélizy-Villacoublay Cedex (FR)
(72) Erfinder: Wieckhorst, Jan Carsten, 33098 Paderborn (DE); Ehlert, Christian, 33719 Bielefeld (DE)
(74) Vertreter: CLAAS Gruppe

(56) Entgegenhaltungen:
- EP-B1- 2 186 394
- WO-A1-2013/013917
- DE-A1- 19 963 156
- DE-A1-102006 044 159
- DE-T5-112012 000 425
- US-A- 5 916 298

## Beschreibung

Die vorliegende Erfindung betrifft eine landwirtschaftliche Arbeitsmaschine gemäß dem Oberbegriff von Anspruch 1 sowie ein Verfahren für den Betrieb einer solchen landwirtschaftlichen Arbeitsmaschine.

Bei der in Rede stehenden landwirtschaftlichen Arbeitsmaschine kann es sich um jedwede landwirtschaftliche Arbeitsmaschine handeln, die der Abarbeitung eines landwirtschaftlichen Arbeitsprozesses dient und die mit einem Fahrerassistenzsystem ausgestattet ist. Dazu gehören beispielsweise Traktoren, selbstfahrende Erntemaschinen, insbesondere Feldhäcksler, Mähdrescher o. dgl. Der optimalen Einstellung der Betriebsparameter, die den jeweils aktuellen Betriebspunkt der Arbeitsmaschine bestimmen, kommt vorliegend besondere Bedeutung zu. Je nach Anwendungsfall existieren eine Mehrzahl von Betriebsparametern, die zueinander in nicht linearen Zusammenhängen stehen. Dabei ergibt sich nicht selten die Situation, dass auch erfahrene Benutzer nicht zu der optimalen Einstellung der Betriebsparameter finden.

Aus der DE 10 2006 044 159 A1 ist eine Anzeigeeinheit einer landwirtschaftlichen Arbeitsmaschine bekannt, welche den Bediener in die Lage versetzen soll, die Arbeitsmaschine schneller an einen optimalen Betriebspunkt heranzuführen. Ein Steuersystem mit einer Anzeigeeinrichtung für einen Traktor mit Luftreifen ist aus der WO 2013/013917 A1 bekannt. Das System informiert einen Bediener über das optimale Gewicht des Traktors an jeder Achse, um ein vorbestimmtes optimales Achslastverhältnis zu erzielen. Basierend auf einer Nachschlagetabelle kann das System für eine aktuelle Radlast und eine Traktorgrundgeschwindigkeit über einen geeigneten Reifendruck informieren.

Die bekannte landwirtschaftliche Arbeitsmaschine (EP 2 186 394 B1), von der die Erfindung ausgeht, weist ein Fahrerassistenzsystem mit einer graphischen Benutzerschnittstelle auf, über die der jeweils aktuelle Betriebspunkt graphisch dargestellt wird. Die graphische Darstellung beschränkt sich jedoch auf den Grad der Abweichung eines Betriebsparameters von seinem optimalen Wert. Dies gibt dem Benutzer zwar eine erste Hilfestellung beim Auffinden des optimalen Betriebspunkts. Allerdings gibt diese graphische Darstellung dem

Benutzer nicht Aufschluss darüber, in welchem Maße eine Betriebsparameteränderung Einfluss auf das Optimierungsergebnis insgesamt hat. Die Vorhersehbarkeit der Auswirkung einer benutzerseitigen Betriebsparameteränderung ist damit eingeschränkt.

Der Erfindung liegt das Problem zugrunde, die bekannte landwirtschaftliche Arbeitsmaschine derart auszugestalten und weiterzubilden, dass die Vorhersehbarkeit der Auswirkung einer benutzerseitigen Betriebsparameteränderung verbessert wird.

Das obige Problem wird erfindungsgemäß durch die Merkmale des unabhängigen Patentanspruchs 1 gelöst, wobei vorteilhafte Weiterbildungen der erfindungsgemäßen landwirtschaftlichen Arbeitsmaschine Gegenstand der entsprechenden abhängigen Patentansprüche 2 bis 9 sind.

Demgemäß betrifft die vorliegende Erfindung eine landwirtschaftliche Arbeitsmaschine zur Abarbeitung eines landwirtschaftlichen Arbeitsprozesses, die in einem durch Betriebsparameter definierten Betriebspunkt betrieben wird, mit einem Fahrerassistenzsystem, das einen Speichermit im Speicher hinterlegten Daten, eine Rechenvorrichtung zur Verarbeitung der in dem Speicher hinterlegten Daten und eine grafische Benutzerschnittstelle umfasst. Die Rechenvorrichtung ermittelt während der Abarbeitung des Arbeitsprozesses den jeweils aktuellen Betriebspunkt, wobei die Rechenvorrichtung über die Benutzerschnittstelle ein Betriebsdatenfeld grafisch darstellt, das einen Anzeige-Wertebereich für einen ersten Betriebsparameter repräsentiert, und in dem Betriebsdatenfeld den aktuellen Wert für den ersten Betriebsparameter grafisch darstellt. Die landwirtschaftliche Arbeitsmaschine ist dadurch gekennzeichnet, dass die Rechenvorrichtung den ersten Betriebsparameter über zumindest einen Teil des Anzeige-Wertebereichs nach einem Bewertungskriterium bewertet, das einen zweiten Betriebsparameter betrifft, dass in dem Speicher ein Kennfeldsystem hinterlegt ist, das Zusammenhänge zwischen zumindest einem Teil der Betriebsparameter enthält und dass die Rechenvorrichtung die Bewertung des ersten Betriebsparameters basierend auf einem in dem Kennfeldsystem enthaltenen Zusammenhang zwischen dem ersten Betriebsparameter und dem zweiten Betriebsparameter vornimmt und die so ermittelten Bewertungsdaten in dem Betriebsdatenfeld grafisch darstellt, wobei die Arbeitsmaschine einen Fahrantrieb und mindestens zwei Antriebs-Laufelemente, insbesondere Antriebsräder oder Antriebsraupen, aufweist, die vom Fahrantrieb zur Erzeugung einer Traktion zum Boden angetrieben werden und wobei der erste Betriebsparameter die Traktion zwischen den Antriebs-Laufelementen und dem Boden betrifft, und die Rechenvorrichtung in dem Betriebsdatenfeld darstellt, dass durch eine Änderung eines dritten Betriebsparameters eine Änderung des ersten Betriebsparameters bewirkbar ist, vorzugsweise, dass die Rechenvorrichtung basierend auf dem Kennfeldsystem ermittelt, welche qualitative Änderung des dritten Betriebsparameters zu welcher qualitativen Änderung des ersten Betriebsparameters führt und dies in dem Betriebsdatenfeld darstellt, wobei der dritte Betriebsparameter die Ballastierung der Arbeitsmaschine betrifft.

Dem Benutzer wird demnach mit einem Blick auf das Betriebsdatenfeld ein Eindruck darüber verschafft, welche Auswirkung eine Veränderung des ersten Betriebsparameters haben kann.

Ferner steht dem Benutzer mit einem Blick auf das Betriebsdatenfeld nicht nur der aktuelle Wert des ersten Betriebsparameters, sondern gleichzeitig auch eine Bewertung des ersten Betriebsparameters über zumindest einen Teil des Anzeige-Wertebereichs zur Verfügung.

Der Begriff "qualitativ" bedeutet in Bezug auf die Änderung des dritten Betriebsparameters, dass es hier lediglich darum geht, ob eine Erhöhung oder Reduzierung des dritten Betriebsparameters zu einer Erhöhung oder Reduzierung des ersten Betriebsparameters führt. Quantitative Angaben über die zahlenmäßigen Werte der betreffenden Betriebsparameter und/oder Bewertungsdaten sind hiermit ausdrücklich nicht gemeint.

Das obige Bewertungskriterium kann in einem weiten Bereich gewählt werden. Es gibt vor, wie die Bewertungsdaten, die in dem Betriebsdatenfeld graphisch dargestellt werden, zu ermitteln sind. Im einfachsten Fall gemäß Anspruch 2 handelt es sich bei den Bewertungsdaten schlicht um den jeweiligen Wert des zweiten Betriebsparameters. Das Bewertungskriterium kann aber auch komplexe Berechnungsvorgaben zur Ermittlung der betreffenden Bewertungsdaten enthalten, beispielsweise, um den jeweiligen Grad der Einnahme optimaler oder kritischer Betriebspunkte zu ermitteln, wie in einer Alternative von Anspruch 2 vorgeschlagen ist.

Die weiter bevorzugten Ausgestaltungen gemäß den Ansprüchen 4 und 5 betreffen besonders intuitive Möglichkeiten für die Darstellung der Bewertungsdaten. Bei der besonders bevorzugten Ausgestaltung gemäß Anspruch 4 wird das Betriebsdatenfeld grafisch gewissermaßen mit einem Hintergrund hinterlegt, der in Abhängigkeit von dem Inhalt, insbesondere von dem Wert, der betreffenden Bewertungsdaten von unterschiedlicher Farbe, Farbdichte, Farbzusammensetzung, Helligkeit, Musterung o. dgl. sein kann. Durch die eine geeignete Gestaltung lassen sich speziell kritische Betriebspunkte auf besonders intuitive Weise darstellen.

Die weiter bevorzugten Ausgestaltungen gemäß den Ansprüchen 6 bis 9 betreffen die Darstellung und Optimierung von die Traktion des Fahrantriebs betreffenden Betriebsparametern. Dies spielt speziell bei einer als Traktor ausgestalteten Arbeitsmaschine eine wichtige Rolle. Hier sind regelmäßig hohe Zugkräfte notwendig, insbesondere, wenn es um die Bodenbearbeitung, beispielsweise um das Pflügen, geht. Hier ist der Benutzer gefordert, Betriebsparameter wie Reifendruck oder Ballastierung so einzustellen, dass resultierende Betriebsparameter wie die Traktionseffizienz, der Traktionskoeffizient, der Rollwiderstandskoeffizient oder der Schlupf je nach Anwendungsfall optimiert werden. Die Zusammenhänge zwischen den die Traktion betreffenden Betriebsparametern sind fast durchweg nicht linear und lassen sich mit der vorschlagsgemäßen Lösung, insbesondere mit dem in dem Speicher hinterlegten oder hinterlegbaren Kennfeldsystem gut abbilden. Dies ist auszugsweise Gegenstand von Anspruch 6.

Die vorschlagsgemäße Anzeige von Betriebsparametern lässt sich auf nahezu jedweden Arbeitsprozess anwenden, so dass die erläuterten Anwendungsfälle nur beispielhaft zu verstehen sind.

Nach einer weiteren Lehre gemäß Anspruch 10, der eigenständige Bedeutung zukommt, wird ein Verfahren für den Betrieb einer vorschlagsgemäßen landwirtschaftlichen Arbeitsmaschine als solches beansprucht. Auf alle Ausführungen zu der vorschlagsgemäßen landwirtschaftlichen Arbeitsmaschine, soweit diese geeignet sind, deren Betrieb zu beschreiben, darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße landwirtschaftliche Arbeitsmaschine in einer ganz schematischen Darstellung,
- Fig. 2: Kennfelder des Kennfeldsystems a) für den Zusammenhang zwischen der Traktionseffizienz / dem Rollwiderstandskoeffizienten und dem Schlupf sowie b) für den Zusammenhang zwischen der Traktionseffizienz und dem Schlupf,
- Fig. 3: grafische Darstellungen vorschlagsgemäßer Betriebsdatenfelder für die Darstellung unterschiedlicher Betriebsparameter.

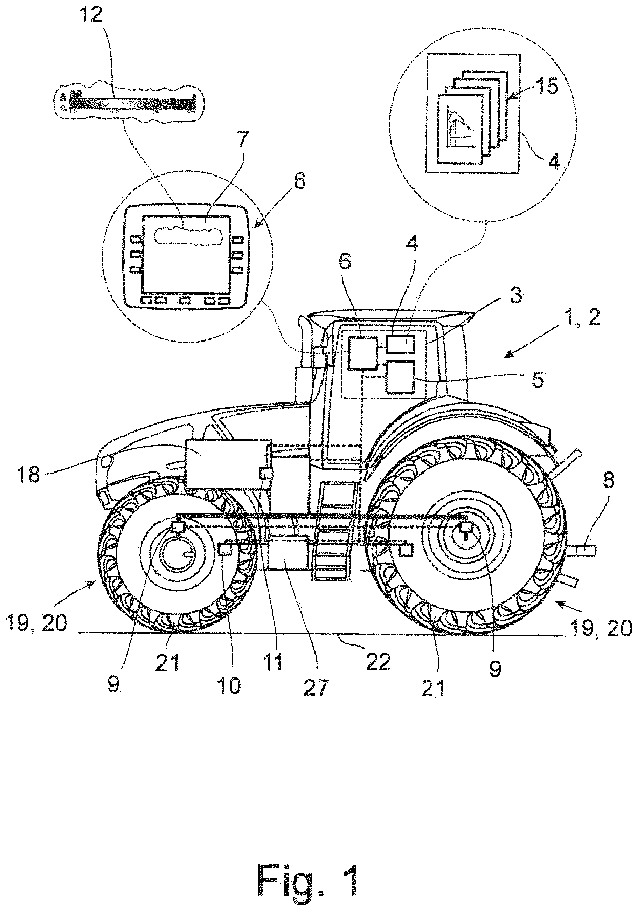

Die in Fig. 1 dargestellte landwirtschaftliche Arbeitsmaschine 1 dient der Abarbeitung eines landwirtschaftlichen Arbeitsprozesses. Hier und vorzugsweise handelt es sich bei der Arbeitsmaschine 1 um einen Traktor 2, welcher beispielsweise als Zugmaschine eingesetzt wird. Die vorschlagsgemäße Lösung ist auf alle anderen, insbesondere im einleitenden Teil genannten landwirtschaftlichen Arbeitsmaschinen anwendbar. Alle folgenden Ausführungen betreffen fast durchweg eine als Traktor 2 ausgestaltete Arbeitsmaschine 1. Diese Ausführungen gelten für alle anderen Arten von landwirtschaftlichen Arbeitsmaschinen entsprechend.

Während des Abarbeitens des landwirtschaftlichen Arbeitsprozesses wird die Arbeitsmaschine 1 zu jedem Zeitpunkt in einem Betriebspunkt betrieben, der durch Betriebsparameter definiert ist. Unter dem Begriff "Betriebsparameter" sind alle Parameter zusammengefasst, die den jeweils aktuellen Zustand der Arbeitsmaschine 1 beschreiben. Darunter fallen solche Betriebsparameter, die unmittelbar durch den Benutzer, also durch eine Benutzereingabe, geändert werden können. Darunter fallen aber auch solche Betriebsparameter, die sich als Folge des Arbeitsprozesses ergeben und die insoweit durch den Benutzer nur mittelbar geändert werden können.

Neben den noch zu erläuternden, antriebstechnischen Komponenten weist die Arbeitsmaschine 1 ein Fahrerassistenzsystem 3 auf, das einen Speicher 4 zum Hinterlegen von Daten, eine Rechenvorrichtung 5 zur Verarbeitung der in dem Speicher 4 hinterlegten Daten und eine graphische Benutzerschnittstelle 6 umfasst. Die graphische Benutzerschnittstelle 6 weist üblicherweise ein Display 7 auf, das ggf. als Touch-Screen ausgebildet ist.

Die Rechenvorrichtung 5 ermittelt während der Abarbeitung des Arbeitsprozesses den jeweils aktuellen Betriebspunkt. Die Ermittlung der Betriebsparameter kann zumindest zum Teil dadurch erfolgen, dass die Rechenvorrichtung 5 der Arbeitsmaschine 1 zugeordnete Sensoren 8, 9, 10, 11 abfragt. Bei dem Sensor 8 handelt es sich hier um einen Zugkraftsensor zur Ermittlung einer Zugkraft, mit der ein zu ziehendes Anbaugerät auf den Traktor 2 wirkt. Bei dem Sensor 9 handelt es sich hier um einen Radsensor, der einem noch zu erläuternden Laufelement 19 zugeordnet ist und über den eine Drehzahl, eine Radkraft, ein Raddrehmoment und/oder eine Achslast, welche an dem Laufelement 19 wirkt, gemessen werden kann. Bei dem Sensor 10 handelt es sich um einen Drucksensor, über den sich ein dem Laufelement 19 zugeordneter Reifendruck messen lässt. Bei dem Sensor 11 handelt es sich schließlich um einen Drehzahlsensor zur Ermittlung der Drehzahl einer Antriebswelle des Fahrantriebs 18.

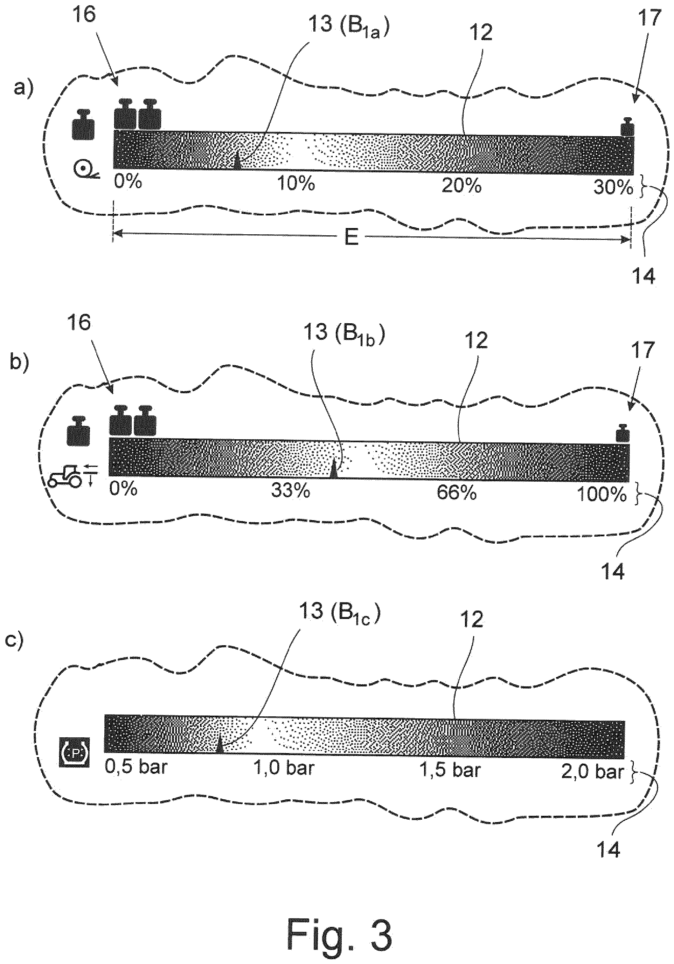

Eine Zusammenschau der Fig. 1 und 3 zeigt, dass die Rechenvorrichtung 5 über die Benutzerschnittstelle 6 ein Betriebsdatenfeld 12 graphisch darstellt, das einen Anzeige-Wertebereich für einen ersten Betriebsparameter B₁ repräsentiert. Bei den in Fig. 3 dargestellten Ausführungsformen ist das Betriebsdatenfeld 12 jeweils balkenförmig ausgestaltet. Andere Ausgestaltungen sind denkbar, wie noch erläutert wird.

In dem Betriebsdatenfeld 12 wird der aktuelle Wert für den ersten Betriebsparameter B₁ graphisch dargestellt, wie ebenfalls der Darstellung gemäß Fig. 3 entnommen werden kann. Die graphische Darstellung des ersten Betriebsparameters B₁ wird hier durch die in entsprechender Lage im Betriebsdatenfeld 12 dargestellte Markierung 13, hier und vorzugsweise durch einen Zeiger, realisiert. Zusätzlich ist dem Betriebsdatenfeld 12 noch eine Skala 14 betreffend den Anzeige-Wertebereich zugeordnet, über die der jeweilige Wert des ersten Betriebsparameters B₁ abgelesen werden kann. Dadurch lässt sich insbesondere der aktuelle Wert für den ersten Betriebsparameter B₁, der durch die Lage der Markierung 13 im Betriebsdatenfeld 12 repräsentiert ist, auf einfache Weise ablesen.

Erfindungsgemäß ist es nun vorgesehen, dass die Rechenvorrichtung 5 den ersten Betriebsparameter B₁ über zumindest einen Teil des Anzeige-Wertebereichs nach einem Bewertungskriterium bewertet. Das Bewertungskriterium betrifft einen zweiten Betriebsparameter B₂, der mit dem ersten Betriebsparameter B₁ in Zusammenhang steht. In dem hier anzunehmenden Fall, dass eine Änderung des ersten Betriebsparameters B₁ regelmäßig auch eine Änderung des zweiten Betriebsparameters B₂ bewirkt, lässt sich eine Bewertung des ersten Betriebsparameters B₁ nach einem Bewertungskriterium vornehmen, das den zweiten Betriebsparameter B₂ betrifft. Hierfür ist es allerdings erforderlich, den Zusammenhang zwischen dem ersten Betriebsparameter B₁ und dem zweiten Betriebsparameter B₂ zu kennen. Hierfür wiederum ist in dem Speicher 4 ein Kennfeldsystem 15 hinterlegt oder hinterlegbar, das Zusammenhänge zwischen zumindest einem Teil der Betriebsparameter, hier und vorzugsweise zwischen dem ersten Betriebsparameter B₁ und dem zweiten Betriebsparameter B₂, enthält.

Erfindungsgemäß ist es entsprechend so, dass die Rechenvorrichtung 5 die Bewertung des ersten Betriebsparameters B₁ basierend auf einem in dem Kennfeldsystem 15 enthaltenen Zusammenhang zwischen dem ersten Betriebsparameter B₁ und dem zweiten Betriebsparameter B₂ vornimmt. Die so ermittelten Bewertungsdaten werden in dem Betriebsdatenfeld 12 graphisch dargestellt.

Bei den Ausführungsformen gemäß Fig. 3 wird der jeweilige Wert der Bewertungsdaten durch eine entsprechende Helligkeit an einer dem jeweiligen Wert des ersten Betriebsparameters B₁ entsprechenden Stelle im Betriebsdatenfeld 12 graphisch darstellt. So ergeben sich die in Fig. 3 dargestellten Helligkeitsverläufe. Daraus resultiert, wie weiter oben schon erläutert, eine besonders übersichtliche Darstellung nicht nur des aktuellen Wertes des ersten Betriebsparameters B₁, sondern auch einer entsprechenden Bewertung des ersten Betriebsparameters B₁ über dem Anzeige-Wertebereich.

Für das Bewertungskriterium, das vorzugsweise ebenfalls im Speicher 4 hinterlegt ist, sind je nach Anwendungsfall verschiedene vorteilhafte Varianten denkbar. In einer ersten bevorzugten Variante ist es schlicht so, dass die Bewertungsdaten gemäß dem Bewertungskriterium dem jeweiligen Wert des zweiten Betriebsparameters B₂ entsprechen. Alternativ kann es vorgesehen sein, dass die Bewertungsdaten gemäß dem Bewertungskriterium dem jeweiligen Grad der Einnahme optimaler oder kritischer Betriebspunkte entsprechen. Auch eine Kombination der beiden oben genannten Bewertungskriterien ist denkbar.

Es wurde schon darauf hingewiesen, dass es sich bei den Betriebsparametern, also auch bei dem ersten Betriebsparameter B₁ und dem zweiten Betriebsparameter B₂, jeweils um einen solchen Betriebsparameter handeln kann, der durch den Benutzer nicht unmittelbar geändert werden kann. In einem solchen Fall ist eine Änderung des ersten Betriebsparameters B₁ und entsprechend des zweiten Betriebsparameters B₂ aber ggf. durch eine Änderung eines dritten Betriebsparameters B₃ möglich. Dann ist es erfindungsgemäß so, dass die Rechenvorrichtung 5 in dem Betriebsdatenfeld 12 darstellt, dass durch eine Änderung eines dritten Betriebsparameters B₃ eine Änderung des ersten Betriebsparameters B₁ bewirkbar ist. In besonders bevorzugter Ausgestaltung ist es dabei vorgesehen, dass die Rechenvorrichtung 5 basierend auf dem Kennfeldsystem 15 ermittelt, welche qualitative Änderung des dritten Betriebsparameters B₃ zu welcher qualitativen Änderung des ersten Betriebsparameters B₁ führt und dies in dem Betriebsdatenfeld 12 darstellt. Bei den in Fig. 3 gezeigten Ausführungsbeispielen ist diese den dritten Betriebsparameter B₃ betreffende Information durch noch zu erläuternde Icons 16, 17 dargestellt.

Grundsätzlich ist es denkbar, dass für einen ersten Betriebsparameter B₁ unterschiedliche, im obigen Sinne dritte Betriebsparameter B₃ existieren, durch deren Änderung eine entsprechende Änderung des ersten Betriebsparameters vollzogen werden kann. In einer bevorzugten Variante ist es vorgesehen, dass die Rechenvorrichtung 5 einen dritten Betriebsparameter B₃ aus dem Kennfeldsystem 15 ermittelt. Alternativ kann es auch vorgesehen sein, dass die Rechenvorrichtung 5 einen dritten Betriebsparameter B₃ über eine Benutzereingabe ermittelt. Schließlich ist denkbar, dass ein dritter Betriebsparameter B₃, der dem ersten Betriebsparameter B₁ in obiger Weise zugeordnet ist, in dem Speicher 4 des Fahrerassistenzsystems 3 hinterlegt ist.

Wie oben erläutert, werden vorschlagsgemäß die Bewertungsdaten in dem Betriebsdatenfeld 12 graphisch dargestellt. Die Darstellung aller ermittelten Bewertungsdaten erfolgt gleichzeitig zu der Darstellung des ersten Betriebsparameters B₁. Hierfür sind eine ganze Reihe vorteilhafter Varianten denkbar.

In den in Fig. 3 dargestellten Ausführungsbeispielen ist es ganz allgemein so, dass die Rechenvorrichtung 5 die ermittelten Bewertungsdaten an einer dem jeweiligen Wert des ersten Betriebsparameters B₁ entsprechenden Stelle im Betriebsdatenfeld 12 graphisch darstellt.

Im Einzelnen stellt die Rechenvorrichtung 5 die ermittelten Bewertungsdaten hier in Abhängigkeit von deren Inhalt, insbesondere von deren Wert, grafisch durch eine unterschiedliche Anzeigeflächeneigenschaft, insbesondere durch unterschiedliche Farbe, Farbdichte, Farbzusammensetzung, Helligkeit, Musterung o. dgl. an einer dem jeweiligen Wert des ersten Betriebsparameters B₁ entsprechenden Stelle im Betriebsdatenfeld 12 graphisch dar. Mit dieser Art der Darstellung der Bewertungsdaten ist es möglich, die Bewertungsdaten anzuzeigen, ohne dass eine alphanumerische Anzeige erforderlich ist. Die wesentliche Information, nämlich, in welcher Weise sich die Bewertungsdaten ändern, wenn der aktuelle Wert für den ersten Betriebsparameter B₁ geändert wird, ist hiermit auf besonders intuitive Weise dargestellt. Insbesondere der zielgerichtete Einsatz von Farben kann in diesem Zusammenhang die intuitive Erfassbarkeit weiter verbessern, beispielsweise, indem kritische Wertebereiche für den ersten Betriebsparameter B₁ rot und optimale Wertebereiche für den ersten Betriebsparameter B₁ grün dargestellt werden.

Hier und vorzugsweise ist das Betriebsdatenfeld 12 als Anzeigefläche, insbesondere als Balkenfläche, graphisch dargestellt. Dabei repräsentiert die Erstreckung E des Betriebsdatenfelds 12 in einer Richtung den Anzeige-Wertebereich, wobei der erste Betriebsparameter B₁ als oben angesprochene, graphische Markierung 13 innerhalb des Betriebsdatenfelds 12 dargestellt wird.

Die in Fig. 3 dargestellte, balkenförmige Ausgestaltung des Betriebsdatenfelds 12 ist nur eine von mehreren möglichen Gestaltungen des Betriebsdatenfelds 12. Beispielsweise ist es auch denkbar, dass das Betriebsdatenfeld 12 nach Art einer Kennlinie, nach Art eines Kuchendiagramms, nach Art eines Netzdiagramms o. dgl. gestaltet ist.

Wie oben erläutert, handelt es sich bei der dargestellten Arbeitsmaschine 1 um einen Traktor 2. Entsprechend ist die Arbeitsmaschine 1 mit einem Fahrantrieb 18 und mit vier Laufelementen 19, bei denen es sich hier und vorzugsweise um Antriebsräder 20 mit Luftreifen 21 handelt, ausgestattet. Bei dem dargestellten und insoweit bevorzugten Ausführungsbeispiel handelt es sich bei allen vier Laufelementen 19 um Antriebs-Laufelemente, die von dem Fahrantrieb 18 angetrieben werden.

Alternativ kann es sich bei den Laufelementen 19 auch um Antriebsraupen handeln. Alle die Laufelemente 19 betreffende Ausführungen gelten für derartige Antriebsraupen entsprechend.

Vor dem Hintergrund, dass die Traktion zwischen den Antriebs-Laufelementen 19, hier den Antriebsrädern 20, und dem Boden 22 von besonderer Bedeutung für den üblicherweise als Zugmaschine eingesetzten Traktor 2 ist, betrifft der erste Betriebsparameter B₁ erfindungsgemäß eben diese Traktion zwischen den Antriebs-Laufelementen 19 und dem Boden 22.

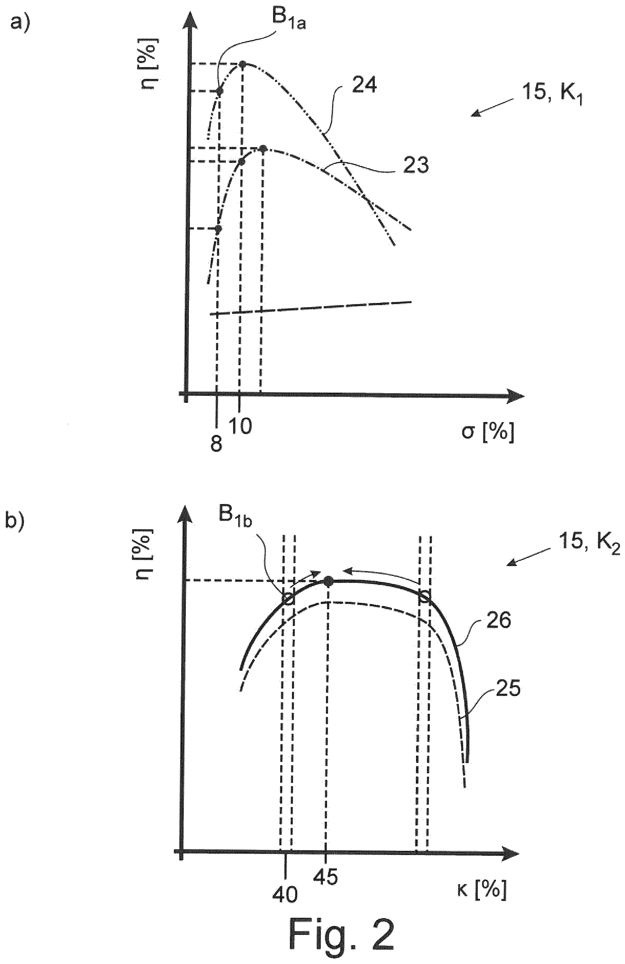

Für den hier vorliegenden Anwendungsfall, bei dem die Traktion der Arbeitsmaschine 1 gegenüber dem Boden 22 im Vordergrund steht, sind in Fig. 2 zwei Kennfelder K₁, K₂ dargestellt. Fig. 2a zeigt das Kennfeld K₁ des Kennfeldsystems 15, das den Zusammenhang zwischen der Traktionseffizienz η und dem Schlupf σ für unterschiedliche Bodenbedingungen enthält. Dabei handelt es sich bei der Traktionseffizienz η bekanntermaßen um den Wirkungsgrad an dem betreffenden Antriebs-Laufelement 19, also um das Verhältnis zu der Vortriebsleistung zu der in das Antrieb-Laufelement 19 eingebrachten Antriebsleistung. Der Schlupf σ repräsentiert ebenfalls bekanntermaßen das Verhältnis der Vortriebsgeschwindigkeit zu der an der jeweiligen Lauffläche des Laufelements 19 gemessenen Laufgeschwindigkeit.

Die Darstellung gemäß Fig. 2a zeigt nur zwei Kennlinien 23, 24 des Kennfelds K₁ für unterschiedliche Bodenbedingungen. Bemerkenswert bei dem in Fig. 2a gezeigten Kennfeld K₁ ist die Tatsache, dass in Abhängigkeit von der jeweiligen Bodenbedingung ganz unterschiedliche Kennlinien 23, 24 zur Anwendung kommen. Dies bedeutet grundsätzlich, dass die Rechenvorrichtung 5 in Abhängigkeit von der jeweiligen Bodenbedingung unterschiedliche Kennfeldsysteme 15 oder zumindest unterschiedlich parametrisierte Kennfeldsysteme 15 bei der Bewertung des ersten Betriebsparameters B₁ heranzieht. Das Kennfeld K₁ kann alternativ oder zusätzlich durch einen Reifendruck der Laufelemente 19 parametrisiert sein.

Das in Fig. 2b gezeigte Kennfeld K₂ zeigt wiederum zwei Kennlinien 25, 26, die unterschiedlichen Reifendrücken des betreffenden Laufelements 19 zugeordnet sind. Das in Fig. 2b dargestellte Kennfeld K₂ zeigt den Zusammenhang zwischen der Traktionseffizienz η und dem Traktionskoeffizienten K. Der Traktionskoeffizient K ist bekanntermaßen das Verhältnis zwischen der resultierenden Vortriebskraft zu der Aufstandskraft der Laufelemente 19.

Der Darstellung gemäß Fig. 2b lässt sich zunächst einmal entnehmen, dass sich eine Steigerung der Traktionseffizienz η durch eine Absenkung des Reifendrucks erzielen lässt. Gleichzeitig lässt sich der Traktionskoeffizient K durch eine Absenkung der Ballastierung der Arbeitsmaschine 1 erhöhen. Im Ergebnis lässt sich die Traktionseffizienz η einerseits durch den Reifendruck und andererseits, über den Traktionskoeffizienten κ, durch die Ballastierung beeinflussen. Das Kennfeld K₂ kann alternativ oder zusätzlich durch die Bodenbedingungen parametrisiert sein.

Die obigen Zusammenhänge bilden die Basis für die in Fig. 3 gezeigten Varianten eines vorschlagsgemäßen Betriebsdatenfelds 12.

Ganz allgemein sind für den ersten Betriebsparameter B₁ unterschiedliche Festlegungen denkbar. In dem in Fig. 3a gezeigten Ausführungsbeispiel handelt es sich bei dem ersten Betriebsparameter B₁ um den Schlupf σ betreffend die Traktion zwischen den Antriebs-Laufelementen 19 und dem Boden 22. In dem in Fig. 3b dargestellten Ausführungsbeispiel dagegen handelt es sich bei dem ersten Betriebsparameter B₁ um den Traktionskoeffizienten K betreffend die Traktion zwischen den Antriebs-Laufelementen 19 und dem Boden 22. Alternativ kann es auch vorgesehen sein, dass es sich bei dem ersten Betriebsparameter B₁ um die Traktionseffizienz η betreffend die Traktion zwischen den Antriebs-Laufelementen 19 und dem Boden 22 handelt. Wiederum als Alternative ist es denkbar, dass es sich bei dem ersten Betriebsparameter B₁ um einen Rollwiderstandskoeffizienten ρ betreffend die Traktion zwischen den Antriebs-Laufelementen 19 und dem Boden 22 handelt.

Je nach Anwendungsfall ist die Rechenvorrichtung 5 dafür ausgelegt, die Traktionseffizienz η, den Traktionskoeffizienten κ, den Schlupf σ oder andere Betriebsparameter sensorbasiert zu ermitteln. Hierfür können verschiedene bekannte Verfahren zur Anwendung kommen.

Bei den oben angesprochenen, ersten Betriebsparametern B₁ handelt es sich jeweils um nur mittelbar durch den Benutzer änderbare Betriebsparameter. Gemäß eines nicht beanspruchten Beispiels kann es vorgesehen sein, dass der erste Betriebsparameter B₁ unmittelbar durch den Benutzer änderbar ist. Hier und vorzugsweise handelt es sich bei dem ersten Betriebsparameter B₁ dann beispielsweise um den Reifendruck der Antriebs-Laufelemente 19. Alternativ kann es sich bei dem ersten Betriebsparameter B₁ dann aber auch um das Ballastgewicht der Ballastierung der Arbeitsmaschine 1, um das Gesamtgewicht der Arbeitsmaschine 1 oder um die Gewichtsverteilung der Ballastierung der Arbeitsmaschine 1 handeln. Entsprechend ist in dem in Fig. 3c dargestellten Beispiel beispielhaft vorgesehen, dass es sich bei dem ersten Betriebsparameter B₁ um den Reifendruck der Antriebs-Laufelements 19 der Arbeitsmaschine 1 handelt.

In dem in Fig. 3a gezeigten Ausführungsbeispiel handelt es sich bei dem ersten Betriebsparameter B₁, wie schon angesprochen, um den Schlupf σ. Der Markierung 13 lässt sich mit Blick auf die Skala 14 entnehmen, dass der Schlupf σ in dem aktuellen Betriebspunkt etwa 8 % beträgt. Bei dem zweiten Betriebsparameter B₂ handelt es sich in Fig. 3 um die Traktionseffizienz η. Dabei entsprechen die Bewertungsdaten gemäß dem Bewertungskriterium dem jeweiligen Wert des zweiten Betriebsparameters B₂, also der Traktionseffizienz η. Dies bedeutet, dass der Schlupf σ über den Anzeige-Wertebereich im Hinblick auf die mit dem jeweiligen Schlupf σ einhergehende Traktionseffizienz η bewertet wird. Die Anordnung ist hier so getroffen, dass die Helligkeit an der betreffenden Stelle im Betriebsdatenfeld 12 den Wert der Traktionseffizienz η repräsentiert. Demnach ist das Maximum der Traktionseffizienz η im Bereich eines Schlupfes von etwa 10 % zu finden.

Ein Blick auf Fig. 2a verrät, dass das Betriebsdatenfeld 12 gemäß Fig. 3a von dem Kennfeld K₁ gemäß Fig. 2a abgeleitet ist. Die Rechenvorrichtung 5 hat hier auf die obere Kennlinie 24 zurückgegriffen. Die Auswahl der Kennlinie 24 ist vorzugsweise basierend auf einer die Bodenbedingung betreffende Benutzereingabe vorgenommen worden.

Die Kennlinie 24 zeigt ein Maximum der Traktionseffizienz η bei einem Schlupf von etwa 10 %. Der aktuelle Wert B₁ₐ des ersten Betriebsparameters B₁ ist in Fig. 2a links von dem Maximalwert für die Traktionseffizienz η dargestellt. Letztlich ist die Darstellung gemäß Fig. 3a also eine intuitive Anzeige für den in Fig. 2a gezeigten, aktuellen Betriebspunkt B₁ₐ.

Fig. 3a zeigt weiter, dass mittels des dritten Betriebsparameters B₃, der über die Icons 16, 17 repräsentiert ist, eine Änderung des ersten Betriebsparameters B₁ möglich ist. Dies ist dadurch gezeigt, dass im linken Bereich ein Icon 16 mit zwei großen Gewichten und im rechten Bereich ein Icon 17 mit einem kleinen Gewicht gezeigt ist. Dadurch wird dem Benutzer der Hinweis gegeben, dass mit einer Reduzierung der Ballastierung eine Steigerung des Schlupfes einhergeht. Dies wiederum ergibt sich aus dem Kennfeld K₂ gemäß Fig. 2b, nach dem mit einer Reduzierung der Ballastierung eine Steigerung der Traktionseffizienz η möglich ist, so dass sich gemäß Fig. 2a der optimale Schlupf σ von 10 % einstellen lässt. Auch insoweit korrespondiert die Darstellung gemäß Fig. 3a mit dem in Fig. 2 dargestellten Kennfeldsystem 15.

Bei dem Ausführungsbeispiel gemäß Fig. 3b handelt es sich bei dem ersten Betriebsparameter B₁ um den Traktionskoeffizienten K. Gemäß Fig. 3b liegt der aktuelle Wert B_{1b} für den ersten Betriebsparameter B₁ bei etwa 40 %. Bei dem zweiten Betriebsparameter B₂ handelt es sich in Fig. 3b wiederum um die Traktionseffizienz η, wobei der Wert der Bewertungsdaten wiederum durch die Helligkeit an der betreffenden Stelle im Betriebsdatenfeld 12 angezeigt wird. Der aktuelle Wert B_{1b} für den ersten Betriebsparameter B₁ ist hier in Fig. 2b gezeigt.

Hieraus wird deutlich, dass eine Reduzierung der Ballastierung, die mit einer Steigerung des Traktionskoeffizienten K einhergeht, zum Erreichen des Maximums der Traktionseffizienz η bei einem Traktionskoeffizienten K von etwa 45% führt. Genau das ist in Fig. 3b dargestellt, indem wiederum die Icons 16, 17 anzeigen, dass eine Reduzierung der Ballastierung zu einem Erreichen des Maximums der Traktionseffizienz η führt, was mit einer geringfügigen Erhöhung des Schlupfes σ einhergeht. Entsprechend geht die Darstellung gemäß Fig. 3b in vollem Umfang auf das Kennfeldsystem 15 gemäß Fig. 2 zurück.

Bei dem Beispiel gemäß Fig. 3c handelt es sich bei dem ersten Betriebsparameter B₁ um den Reifendruck, der über eine Reifendruckregelanlage 27 einstellbar ist. Fig. 3c zeigt, dass dort der aktuelle Wert B_{1c} für den ersten Betriebsparameter B₁ bei etwa 0,8 bar liegt. Bei dem zweiten Betriebsparameter B₂ handelt es sich hier wiederum um die Traktionseffizienz η, deren Wert wiederum über die Helligkeit an der betreffenden Stelle des Betriebsdatenfelds 12 repräsentiert wird. Es lässt sich der Darstellung gemäß Fig. 3c entnehmen, dass in diesem Betriebspunkt eine geringfügige Steigerung des Reifendrucks ausreicht, um ein Maximum in der Traktionseffizienz η zu erreichen. Dieser Zusammenhang zwischen dem Reifendruck und der Traktionseffizienz η geht auf eine weitere Kennlinie zurück, die in Fig. 2 nicht dargestellt ist. Bemerkenswert bei dem in Fig. 3c dargestellten Beispiel ist die Tatsache, dass es sich bei dem ersten Betriebsparameter B₁ hier, wie oben erläutert, um einen unmittelbar vom Benutzer änderbaren Betriebsparameter handelt, so dass ein dritter Betriebsparameter B₃ im obigen Sinne folgerichtig in Fig. 3c nicht dargestellt ist.

Aus der Erläuterung der in Fig. 3 gezeigten Ausführungsbeispiele ergibt sich, dass einer möglichst hohen Genauigkeit des Kennfeldsystems 15 im Hinblick auf die tatsächlich vorliegenden Gegebenheiten, hier insbesondere im Hinblick auf die Bodenbedingung, besondere Bedeutung zukommt.

Entsprechend kann es ganz allgemein vorgesehen sein, dass das Kennfeldsystem 15 zunächst in dem Speicher 4 des Fahrerassistenzsystems 3 hinterlegt ist, jedoch über Benutzereingaben und/oder sensorbasiert parametrierbar ist. So kann das Kennfeldsystem 15 iterativ an die tatsächlichen Gegebenheiten angepasst werden. Es ist aber auch denkbar, dass das Kennfeldsystem 15 in einer Datenbank hinterlegt ist, die zentral für mehrere Arbeitsmaschinen 1 verfügbar ist. Beispielsweise kann es vorgesehen sein, dass die Datenbank Teile eines Kennfeldsystems 15 bereitstellt, die sich aus einer vorangegangenen Bearbeitung ein und derselben zu bearbeitenden Fläche ergeben haben. Insoweit kann es auch vorgesehen sein, dass das jeweilige Kennfeldsystem 15 über die jeweils aktuelle Position der Arbeitsmaschine 1, die ggf. GPS-basiert ermittelt wird, aktualisiert wird.

Ferner darf darauf hingewiesen werden, dass grundsätzlich zwei vorschlagsgemäße Betriebsdatenfelder 12 oder sogar mehr als zwei Betriebsdatenfelder 12 von der Rechenvorrichtung 5 in vorschlagsgemäßer Weise erstellt und über die graphische Benutzerschnittstelle 6 gleichzeitig dargestellt werden können. Dann ist es vorzugsweise so, dass jedem Betriebsdatenfeld 12 ein erster Betriebsparameter B₁, ein zweiter Betriebsparameter B₂ und ggf. ein dritter Betriebsparameter B₃ zugeordnet ist. Hinsichtlich des mindestens einen weiteren Betriebsdatenfelds 12 darf auf alle Ausführungen zu der vorschlagsgemäßen Lösung verwiesen werden.

In besonders bevorzugter Ausgestaltung ist die Rechenvorrichtung 5 schließlich in einen Simulationsmodus bringbar, wobei die Rechenvorrichtung 5 in dem Simulationsmodus bei einer benutzerseitigen Änderung des ersten Betriebsparameters B₁ in einem Betriebsdatenfeld 12 das mindestens eine weitere Betriebsdatenfeld 12 basierend auf dem Kennfeldsystem 15 entsprechend aktualisiert. Damit lässt sich mit geringem Aufwand simulieren, welche Auswirkungen eine Änderung des jeweiligen ersten Betriebsparameters B₁ auf den resultierenden Betriebspunkt der Arbeitsmaschine 1 hat. Eine besonders intuitive Bedienung ergibt sich hier vorzugsweise dadurch, dass sich die entsprechende Markierung 13 im Betriebsdatenfeld 12 durch einen Dragand-Drop Vorgang verstellen lässt, um eine Änderung des ersten Betriebsparameters B₁ zu simulieren.

Bei den Ausführungsbeispielen gemäß Fig. 3 ist es ferner denkbar, dass bei einer benutzerseitigen Änderung des ersten Betriebsparameters B₁ in einem Betriebsdatenfeld 12, beispielsweise durch einen Drag&Drop Vorgang, dieser erste Betriebsparameter B₁ auch tatsächlich maschinenseitig mittelbar oder unmittelbar geändert wird. Beispielhaft für eine solche unmittelbare Änderung sei hier genannt, dass die benutzerseitige Verstellung des Reifendrucks in einem entsprechenden Betriebsdatenfeld 12 eine tatsächliche Anpassung des Reifendrucks der Antriebsräder 20 auslöst. Damit lassen sich die dargestellten Betriebsparameters B₁ auf besonders intuitive Weise ändern.

In einer weiteren Ausführungsform werden in dem Betriebsdatenfeld 12 zusätzlich ein oder mehrere Grenzwerte dargestellt, bei deren Annäherung und/oder Überschreitung bzw. Unterschreitung durch den ersten Betriebsparameter B₁ ein optischer und/oder akustischer Alarm ausgelöst wird. Diese Grenzwerte sind vorzugsweise in dem Speicher 4 des Fahrerassistenzsystems 3 hinterlegt.

Nach einer weiteren Lehre, der eigenständige Bedeutung zukommt, wird ein Verfahren für den Betrieb einer vorschlagsgemäßen, landwirtschaftlichen Arbeitsmaschine als solches beansprucht.

Wesentlich ist auch hier, dass die Rechenvorrichtung 5 den ersten Betriebsparameter B₁ über zumindest einen Teil des Anzeige-Wertebereichs nach einem Bewertungskriterium bewertet, das einen zweiten Betriebsparameter B₂ betrifft. Wesentlich ist weiter, dass in dem Speicher 4 ein Kennfeldsystem 15 hinterlegbar ist, das Zusammenhänge zwischen zumindest einem Teil der Betriebsparameter enthält und das die Rechenvorrichtung 5 die Bewertung des ersten Betriebsparameters B₁ basierend auf einem in dem Kennfeldsystem 15 enthaltenen Zusammenhang zwischen dem ersten Betriebsparameter B₁ und dem zweiten Betriebsparameter B₂ vornimmt. Wesentlich ist schließlich, dass die so ermittelten Bewertungsdaten in dem Betriebsdatenfeld graphisch dargestellt werden. Insoweit darf auf alle Ausführungen zu der Betriebsweise der vorschlagsgemäßen Arbeitsmaschine 1 verwiesen werden.

Interessant an der vorschlagsgemäßen Art und Weise der Darstellung von Betriebsparametern ist die einfache Modularisierbarkeit im Hinblick auf das der Bewertung zugrundeliegende Kennfeldsystem 15. Im Einzelnen wird vorgeschlagen, dass die Rechenvorrichtung 5 in Abhängigkeit von dem Arbeitsprozess den ersten Betriebsparameter B₁, den zweiten Betriebsparameter B₂ und ggf. den dritten Betriebsparameter B₃ bestimmt und basierend auf dieser Definition das Betriebsdatenfeld 12 grafisch darstellt, den ersten Betriebsparameter B₁ bewertet und die ermittelten Bewertungsdaten in dem Betriebsdatenfeld 12 grafisch darstellt. Im einfachsten Fall wird der Arbeitsprozess über die Benutzerschnittstelle 6 eingegeben.

Alternativ oder zusätzlich kann es vorgesehen sein, dass die Rechenvorrichtung 5 in Abhängigkeit von dem Arbeitsprozess das Kennfeldsystem 15 bestimmt oder parametrisiert, insbesondere aus einer Anzahl von in dem Speicher 4 hinterlegten Kennfeldsystemen auswählt. Auch hier kann die Auswahl des Arbeitsprozesses vom Benutzer vorgenommen werden, insbesondere die Benutzerschnittstelle 6.

Schließlich darf darauf hingewiesen werden, dass die vorschlagsgemäße Lösung auf eine nahezu unbegrenzte Anzahl von Arbeitsprozessen anwendbar ist.

Ein weiterer beispielhafter Arbeitsprozess ist der Betrieb einer Ballenpresse, insbesondere einer Quaderballenpresse. Hier ist der Pressdruck beispielsweise im Hinblick auf die resultierende Ballendichte zu optimieren. Entsprechend kann es sich für das vorschlagsgemäße Betriebsdatenfeld 12 bei dem ersten Betriebsparameter B₁ um den Pressdruck und bei dem zweiten Betriebsparameter B₂ um die resultierende Ballendichte handeln.

Ein weiterer beispielhafter Arbeitsprozess ist der Betrieb einer Sämaschine für die Einzelkornsaat. Hier ist beispielsweise die Arbeitsgeschwindigkeit im Hinblick auf die resultierende Ablagegenauigkeit zu optimieren. Entsprechend kann es sich für das vorschlagsgemäße Betriebsdatenfeld 12 bei dem ersten Betriebsparameter B₁ um die Arbeitsgeschwindigkeit und bei dem zweiten Betriebsparameter B₂ um die resultierende Ablagegenauigkeit handeln.

Ein weiterer beispielhafter Arbeitsprozess ist der Betrieb einer Verbrennungskraftmaschine einer landwirtschaftlichen Arbeitsmaschine. Hier ist ein erster Maschinenparameter, beispielsweise die Motordrehzahl, im Hinblick auf einen zweiten Maschinenparameter, beispielsweise den resultierenden spezifischen Kraftstoffverbrauch, zu optimieren. Entsprechend kann es sich für das vorschlagsgemäße Betriebsdatenfeld 12 bei dem ersten Betriebsparameter B₁ um die Motordrehzahl und bei dem zweiten Betriebsparameter B₂ um die resultierende den spezifischen Kraftstoffverbrauch handeln.

Ein weiterer beispielhafter Arbeitsprozess ist schließlich der Betrieb einer Erntemaschine. Hier ist beispielsweise eine Flächenleistung im Hinblick auf den Flächenverbrauch zu optimieren. Entsprechend kann es sich für das vorschlagsgemäße Betriebsdatenfeld 12 bei dem ersten Betriebsparameter B₁ um die Flächenleistung und bei dem zweiten Betriebsparameter B₂ um den resultierenden Flächenverbrauch handeln.

### Bezugszeichenliste

- 1: Arbeitsmaschine
- 2: Traktor
- 3: Fahrerassistenzsystem
- 4: Speicher
- 5: Rechenvorrichtung
- 6: Benutzerschnittstelle
- 7: Display
- 8: Zugkraftsensor
- 9: Radsensor
- 10: Drucksensor
- 11: Drehzahlsensor
- 12: Betriebsdatenfeld
- 13: Markierung
- 14: Skala
- 15: Kennfeldsystem
- 16: Icon
- 17: Icon
- 18: Fahrantrieb
- 19: Laufelement
- 20: Antriebsräder
- 21: Laufreifen
- 22: Boden
- 23, 24: Kennlinien
- 25, 26: Kennlinien
- 27: Reifendruckregelanlage
- B₁, B₂, B₃: Betriebsparameter
- K_{1,} K₂: Kennfeld
- K: Traktionskoeffizienten
- η: Traktionseffizienz
- σ: Schlupf
- ρ: Rollwiderstandskoeffizient

## Patentansprüche

1. Landwirtschaftliche Arbeitsmaschine (1) zur Abarbeitung eines landwirtschaftlichen Arbeitsprozesses, die in einem durch Betriebsparameter definierten Betriebspunkt betrieben wird, mit einem Fahrerassistenzsystem (3), das einen Speicher (4) mit im Speicher (4) hinterlegten Daten, eine Rechenvorrichtung (5) zur Verarbeitung der in dem Speicher (4) hinterlegten Daten und eine grafische Benutzerschnittstelle (6) umfasst, wobei die Rechenvorrichtung (5) während der Abarbeitung des Arbeitsprozesses den jeweils aktuellen Betriebspunkt ermittelt, wobei die Rechenvorrichtung (5) über die Benutzerschnittstelle (6) ein Betriebsdatenfeld (12) grafisch darstellt, das einen Anzeige-Wertebereich für einen ersten Betriebsparameter (B1) repräsentiert, und in dem Betriebsdatenfeld (12) den aktuellen Wert für den ersten Betriebsparameter (B1) grafisch darstellt,
wobei die Rechenvorrichtung (5) den ersten Betriebsparameter (B1) über zumindest einen Teil des Anzeige-Wertebereichs nach einem Bewertungskriterium bewertet, das einen zweiten Betriebsparameter (B2) betrifft, dass in dem Speicher (4) ein Kennfeldsystem (15) hinterlegt ist, das Zusammenhänge zwischen zumindest einem Teil der Betriebsparameter enthält und dass die Rechenvorrichtung (5) die Bewertung des ersten Betriebsparameters (B1) basierend auf einem in dem Kennfeldsystem (15) enthaltenen Zusammenhang zwischen dem ersten Betriebsparameter (B1) und dem zweiten Betriebsparameter (B2) vornimmt und die so ermittelten Bewertungsdaten in dem Betriebsdatenfeld (12) grafisch darstellt, wobei die Arbeitsmaschine (1) einen Fahrantrieb (18) und mindestens zwei Antriebs-Laufelemente (19), insbesondere Antriebsräder (20) oder Antriebsraupen, aufweist, die vom Fahrantrieb (18) zur Erzeugung einer Traktion zum Boden (22) angetrieben werden, **dadurch gekennzeichnet, dass** der erste Betriebsparameter (B1) die Traktion zwischen den Antriebs-Laufelementen (19) und dem Boden (22) betrifft, und die Rechenvorrichtung (5) in dem Betriebsdatenfeld (12) darstellt, dass durch eine Änderung eines dritten Betriebsparameters (B₃) eine Änderung des ersten Betriebsparameters (B₁) bewirkbar ist, vorzugsweise, dass die Rechenvorrichtung (5) basierend auf dem Kennfeldsystem (15) ermittelt, welche qualitative Änderung des dritten Betriebsparameters (B₃) zu welcher qualitativen Änderung des ersten Betriebsparameters (B₁) führt und dies in dem Betriebsdatenfeld (12) darstellt, wobei der dritte Betriebsparameter (B₃) die Ballastierung der Arbeitsmaschine (1) betrifft.

2. Arbeitsmaschine nach Anspruch 1, **dadurch gekennzeichnet, dass** die Bewertungsdaten gemäß dem Bewertungskriterium dem jeweiligen Wert des zweiten Betriebsparameters (B₂) entsprechen, und/oder, dass die Bewertungsdaten gemäß dem Bewertungskriterium dem jeweiligen Grad der Einnahme optimaler oder kritischer Betriebspunkte entsprechen.

3. Arbeitsmaschine nach einem der vorhergehenden Ansprüche, **dadurch gekennzeichnet, dass** die Rechenvorrichtung (5) die ermittelten Bewertungsdaten an einer dem jeweiligen Wert des ersten Betriebsparameters (B₁) entsprechenden Stelle im Betriebsdatenfeld (12) graphisch darstellt.

4. Arbeitsmaschine nach einem der vorhergehenden Ansprüche, **dadurch gekennzeichnet, dass** die Rechenvorrichtung (5) die ermittelten Bewertungsdaten in Abhängigkeit von deren Inhalt, insbesondere von deren Wert, grafisch durch eine unterschiedliche Anzeigeflächeneigenschaft, insbesondere durch unterschiedliche Farbe, Farbdichte, Farbzusammensetzung, Helligkeit, Musterung o. dgl. an einer dem jeweiligen Wert des ersten Betriebsparameters (B₁) entsprechenden Stelle im Betriebsdatenfeld (12) grafisch darstellt.

5. Arbeitsmaschine nach einem der vorhergehenden Ansprüche, **dadurch gekennzeichnet, dass** das Betriebsdatenfeld (12) als Anzeigefläche, beispielsweise als Balkenfläche, grafisch dargestellt wird, deren Erstreckung in einer Richtung den Anzeige-Wertebereich repräsentiert, und dass der erste Betriebsparameter (B₁) als grafische Markierung (13), insbesondere als Zeiger, innerhalb des Betriebsdatenfelds (12) dargestellt wird.

6. Arbeitsmaschine nach Anspruch 1, **dadurch gekennzeichnet, dass** das Kennfeldsystem (15) ein Kennfeld (K₁) beinhaltet, das den Zusammenhang zwischen der Traktionseffizienz (η) und dem Schlupf (σ) für unterschiedliche Bodenbedingungen enthält, und/oder, dass das Kennfeldsystem (15) ein Kennfeld (K₂) beinhaltet, das den Zusammenhang zwischen der Traktionseffizienz (η) und dem Traktionskoeffizienten (K) für unterschiedliche Reifendrücke enthält.

7. Arbeitsmaschine nach Anspruch 1 oder 6, **dadurch gekennzeichnet, dass** der erste Betriebsparameter der Schlupf (σ) zwischen mindestens den Antriebs-Laufelementen (19) und dem Boden (22) ist, oder, dass der erste Betriebsparameter (B₁) die Traktionseffizienz (η) betreffend die Traktion zwischen den Antriebs-Laufelementen (19) und dem Boden (22) ist, oder, dass der erste Betriebsparameter (B₁) ein Traktionskoeffizient (K) betreffend die Traktion zwischen den Antriebs-Laufelementen (19) und dem Boden (22) ist, oder, dass der erste Betriebsparameter (B₁) ein Rollwiderstandskoeffizient (ρ) betreffend die Traktion zwischen den Laufelementen (19) und dem Boden (22) ist.

8. Arbeitsmaschine nach einem der Ansprüche 1 bis 7, **dadurch gekennzeichnet, dass** der erste Betriebsparameter (B₁) der Schlupf (σ) betreffend die Traktion zwischen den Antriebs-Laufelementen (19) und dem Boden (22) ist und dass der zweite Betriebsparameter (B₂) die Traktionseffizienz (η) betreffend die Traktion zwischen den Antriebs-Laufelementen (19) und dem Boden (22) ist.

9. Arbeitsmaschine nach einem der Ansprüche 1 bis 8, **dadurch gekennzeichnet, dass** der erste Betriebsparameter (B₁) der Traktionskoeffizient (K) betreffend die Traktion zwischen den Antriebs-Laufelementen (19) und dem Boden (22) ist und dass der zweite Betriebsparameter (B₂) die Traktionseffizienz (η) betreffend die Traktion zwischen den Antriebs-Laufelementen (19) und dem Boden (22) ist.

10. Verfahren für den Betrieb einer landwirtschaftlichen Arbeitsmaschine (1) gemäß Anspruch 1, die zur Abarbeitung eines landwirtschaftlichen Arbeitsprozesses in einem durch Betriebsparameter definierten Betriebspunkt betrieben wird, wobei die Arbeitsmaschine (1) ein Fahrerassistenzsystem (3) aufweist, das einen Speicher (4) zum Hinterlegen von Daten, eine Rechenvorrichtung (5) zur Verarbeitung der in dem Speicher (4) hinterlegten Daten und eine grafische Benutzerschnittstelle (6) umfasst, wobei die Rechenvorrichtung (5) während der Abarbeitung des Arbeitsprozesses den jeweils aktuellen Betriebspunkt ermittelt, wobei die Rechenvorrichtung (5) über die Benutzerschnittstelle (6) ein Betriebsdatenfeld (12) grafisch darstellt, das einen Anzeige-Wertebereich für einen ersten Betriebsparameter (B₁) repräsentiert, und in dem Betriebsdatenfeld (12) den aktuellen Wert für den ersten Betriebsparameter (B₁) grafisch darstellt, wobei die Rechenvorrichtung (5) den ersten Betriebsparameter (B₁) über zumindest einen Teil des Anzeige-Wertebereichs nach einem Bewertungskriterium bewertet, das einen zweiten Betriebsparameter (B₂) betrifft, dass in dem Speicher (4) ein Kennfeldsystem (15) hinterlegt ist, das Zusammenhänge zwischen zumindest einem Teil der Betriebsparameter enthält und dass die Rechenvorrichtung (5) die Bewertung des ersten Betriebsparameters (B₁) basierend auf einem in dem Kennfeldsystem (15) enthaltenen Zusammenhang zwischen dem ersten Betriebsparameter (B₁) und dem zweiten Betriebsparameter (B₂) vornimmt und die so ermittelten Bewertungsdaten in dem Betriebsdatenfeld (12) grafisch darstellt, wobei die Arbeitsmaschine (1) einen Fahrantrieb (18) und mindestens zwei Antriebs-Laufelemente (19), insbesondere Antriebsräder (20) oder Antriebsraupen aufweist, die vom Fahrantrieb (18) zur Erzeugung einer Traktion zum Boden (22) angetrieben werden und wobei der erste Betriebsparameter (B1) die Traktion zwischen den Antriebslaufelementen (19) und dem Boden (22) betrifft, und wobei die Recheneinrichtung in dem Betriebsdatenfeld (12) darstellt, dass durch eine Änderung eines dritten Betriebsparameters (B₃) eine Änderung des ersten Betriebsparameters (B₁) bewirkbar ist, vorzugsweise, dass die Rechenvorrichtung (5) basierend auf dem Kennfeldsystem (15) ermittelt, welche qualitative Änderung des dritten Betriebsparameters (B₃) zu welcher qualitativen Änderung des ersten Betriebsparameters (B₁) führt und dies in dem Betriebsdatenfeld (12) darstellt, wobei der dritte Betriebsparameter (B₃) die Ballastierung der Arbeitsmaschine (1) betrifft.

11. Verfahren nach Anspruch 10, **dadurch gekennzeichnet, dass** die Rechenvorrichtung (5) in Abhängigkeit von dem Arbeitsprozess den ersten Betriebsparameter B₁, den zweiten Betriebsparameter B₂ und ggf. den dritten Betriebsparameter B₃ bestimmt und basierend auf dieser Definition das Betriebsdatenfeld (12) grafisch darstellt, den ersten Betriebsparameter (B₁) bewertet und die ermittelten Bewertungsdaten in dem Betriebsdatenfeld (12) grafisch darstellt.

12. Verfahren nach Anspruch 11, **dadurch gekennzeichnet, dass** die Rechenvorrichtung (5) in Abhängigkeit von dem Arbeitsprozess das Kennfeldsystem (15) bestimmt oder parametrisiert, insbesondere aus einer Anzahl von in dem Speicher (4) hinterlegten Kennfeldsystemen auswählt.

## Claims

1. An agricultural working machine (1) for the execution of an agricultural working process which is operated at an operating point defined by operating parameters, with a driver assistance system (3) which comprises a memory (4) with data stored in the memory (4), a computing device (5) for processing the data stored in the memory (4), and a graphical user interface (6), wherein the computing device (5) determines the respective current operating point during the execution of the working process, wherein the computing device (5) graphically depicts an operating data field (12) via the user interface (6) which represents a range of display values for a first operating parameter (B₁), and the current value for the first operating parameter (B₁) is graphically depicted in the operating data field (12),
wherein the computing device (5) evaluates the first operating parameter (B₁) over at least a portion of the range of display values in accordance with an evaluation criterion which relates to a second operating parameter (B₂), wherein a characteristic diagram system (15) is stored in the memory (4) and contains relationships between at least a portion of the operating parameters, and wherein the computing device (5) carries out the evaluation of the first operating parameter (B₁) based on a relationship between the first operating parameter (B₁) and the second operating parameter (B₂) contained in the characteristic diagram system (15) and graphically depicts the evaluation data determined thereby in the operating data field (12), wherein the working machine (1) has a propulsion unit (18) and at least two drive running elements (19), in particular drive wheels (20) or drive tracks, which are driven by the propulsion unit (18) in order to produce a traction on the ground, **characterized in that** the first operating parameter (B₁) relates to the traction between the drive running elements (19) and the ground (22) and the computing device (5) shows in the operating data field (12) that a change in a third operating parameter (B₃) can lead to a change in the first operating parameter (B₁), preferably that, based on the characteristic diagram system (15), the computing device (5) determines which qualitative change in the third operating parameter (B₃) leads to which qualitative change in the first operating parameter (B₁) and depicts this in the operating data field (12), wherein the third operating parameter (B₃) relates to the ballasting of the working machine (1).

2. The working machine according to claim 1, **characterized in that** the evaluation data in accordance with the evaluation criterion correspond to the respective value of the second operating parameter (B₂), and/or **in that** the evaluation data in accordance with the evaluation criterion correspond to the respective degree of inclusion of optimal or critical operating points.

3. The working machine according to one of the preceding claims, **characterized in that** the computing device (5) graphically depicts the determined evaluation data at a position in the operating data field (12) which corresponds to the respective value of the first operating parameter (B₁).

4. The working machine according to one of the preceding claims, **characterized in that** the computing device (5) graphically depicts the determined evaluation data as a function of their content, in particular of their value, graphically by a different property of the display surface, in particular by a different colour, colour density, colour composition, brightness, pattern or the like at a position in the operating data field (12) which corresponds to the respective value of the first operating parameter (B₁).

5. The working machine according to one of the preceding claims, **characterized in that** the operating data field (12) is graphically depicted as a display surface, for example as a bar, the extent of which in one direction represents the range of display values, and **in that** the first operating parameter (B₁) is depicted as a graphical marking (13), in particular as a pointer, within the operating data field (12).

6. The working machine according to claim 1, **characterized in that** the characteristic diagram system (15) includes a characteristic diagram (K₁) which contains the relationship between the traction efficiency (η) and the slippage (σ) for different ground conditions, and/or **in that** the characteristic diagram system (15) includes a characteristic diagram (K₂) which contains the relationship between the traction efficiency (η) and the traction coefficient (K) for different tyre pressures.

7. The working machine according to claim 1 or claim 6, **characterized in that** the first operating parameter is the slippage (σ) between at least the drive running elements (19) and the ground (22), or **in that** the first operating parameter (B₁) is the traction efficiency (η) relating to the traction between the drive running elements (19) and the ground (22), or **in that** the first operating parameter (B₁) is a traction coefficient (K) relating to the traction between the drive running elements (19) and the ground (22), or **in that** the first operating parameter (B₁) is a rolling resistance coefficient (ρ) relating to the traction between the running elements (19) and the ground (22).

8. The working machine according to one of claims 1 to 7, **characterized in that** the operating parameter (B₁) is the slippage (σ) relating to the traction between the drive running elements (19) and the ground (22) and **in that** the second operating parameter (B₂) is the traction efficiency (η) relating to the traction between the drive running elements (19) and the ground (22).

9. The working machine according to one of claims 1 to 8, **characterized in that** the first operating parameter (B₁) is the traction coefficient (K) relating to the traction between the drive running elements (19) and the ground (22) and **in that** the second operating parameter (B₂) is the traction efficiency (η) relating to the traction between the drive running elements (19) and the ground (22).

10. A method for operating an agricultural working machine (1) according to claim 1, which is operated in order to execute an agricultural working process at an operating point defined by operating parameters, wherein the working machine (1) has a driver assistance system (3) which comprises a memory (4) for storing data, a computing device (5) for processing the data stored in the memory (4) and a graphical user interface (6), wherein the computing device (5) determines the respective current operating point during the execution of the working process, wherein the computing device (5) graphically depicts an operating data field (12) via the user interface (6) which represents a range of display values for a first operating parameter (B₁), and graphically depicts the current value for the first operating parameter (B₁) in the operating data field (12), wherein the computing device (5) evaluates the first operating parameter (B₁) over at least a portion of the range of display values in accordance with an evaluation criterion which relates to a second operating parameter (B₂), wherein a characteristic diagram system (15) is stored in the memory (4) which contains relationships between at least a portion of the operating parameters and wherein the computing device (5) carries out the evaluation of the first operating parameter (B₁) based on a relationship between the first operating parameter (B₁) and the second operating parameter (B₂) contained in the characteristic diagram system (15) and graphically depicts the evaluation data determined in this manner in the operating data field (12), wherein the working machine (1) has a propulsion unit (18) and at least two drive running elements (19), in particular drive wheels (20) or drive tracks, which are driven by the propulsion unit (18) in order to produce a traction on the ground (22) and wherein the first operating parameter (B1) relates to the traction between the drive running elements (19) and the ground (22), and wherein the computing device shows in the operating data field (12) that a change in a third operating parameter (B₃) can cause a change in the first operating parameter (B₁), preferably in that the computing device (5) determines, based on the characteristic diagram system (15), which qualitative change in the third operating parameter (B₃) leads to which qualitative change in the first operating parameter (B₁) and depicts this in the operating data field (12), wherein the third operating parameter (B₃) relates to the ballasting of the working machine (1).

11. The method according to claim 10, **characterized in that** the computing device (5) determines the first operating parameter (B₁), the second operating parameter (B₂) and where appropriate the third operating parameter (B₃) as a function of the working process and graphically depicts the operating data field (12) based on this definition, evaluates the first operating parameter (B₁) and graphically depicts the determined evaluation data in the operating data field (12).

12. The method according to claim 11, **characterized in that** the computing device (5) determines or parameterizes the characteristic diagram system (15) as a function of the working process, in particular from a number of characteristic diagram systems stored in the memory (4).

## Revendications

1. Machine de travail agricole (1) pour exécuter un processus de travail agricole qui est effectué à un point de fonctionnement défini par des paramètres de fonctionnement, comprenant un système d'assistance à la conduite (3) qui inclut une mémoire (4) avec des données enregistrées dans la mémoire (4), un dispositif de calcul (5) pour le traitement des données enregistrées dans la mémoire (4), et une interface utilisateur graphique (6), le dispositif de calcul déterminant le point de fonctionnement respectivement instantané pendant l'exécution du processus de travail, le dispositif de calcul (5) représentant graphiquement par l'intermédiaire de l'interface utilisateur (6) un champ de données de fonctionnement (12) qui représente une zone de valeurs affichées pour un premier paramètre de fonctionnement (B1), et représentant dans le champ de données de fonctionnement (12) la valeur instantanée pour le premier paramètre de fonctionnement (B1), le dispositif de calcul (5) évaluant le premier paramètre de fonctionnement (B1) par l'intermédiaire d'au moins une partie de la zone de valeurs affichées selon un critère d'évaluation qui concerne un deuxième paramètre de fonctionnement (B2), en ce que dans la mémoire (4) est enregistré un système de diagramme caractéristique (15) qui contient des relations entre au moins une partie des paramètres de fonctionnement, et en ce que le dispositif de calcul (5) effectue l'évaluation du premier paramètre de fonctionnement (B1) sur la base d'une relation contenue dans le système de diagramme caractéristique (15) entre le premier paramètre de fonctionnement (B1) et le deuxième paramètre de fonctionnement (B2) et représente graphiquement les données d'évaluation ainsi déterminées dans le champ de données de fonctionnement (12), la machine de travail (1) comportant un groupe propulseur (18) et au moins deux éléments roulants d'entraînement (19), en particulier des roues motrices (20) ou des chenilles motrices, qui sont entraînés par le groupe propulseur (18) pour générer une traction par rapport au sol (22), **caractérisée en ce que** le premier paramètre de fonctionnement (B1) concerne la traction entre les éléments roulants d'entraînement (19) et le sol (22), et le dispositif de calcul (5) représente dans le champ de données de fonctionnement (12) qu'en modifiant un troisième paramètre de fonctionnement (B₃) on peut provoquer une modification du premier paramètre de fonctionnement (B₁), préférentiellement **en ce que** le dispositif de calcul (5) détermine sur la base du système de diagramme caractéristique (15) quelle modification qualitative du troisième paramètre de fonctionnement (B₃) conduit à quelle modification qualitative du premier paramètre de fonctionnement (B₁) et le représente dans le champ de données de fonctionnement (12), le troisième paramètre de fonctionnement (B₃) concernant le lestage de la machine de travail (1).

2. Machine de travail selon la revendication 1, **caractérisée en ce que** les données d'évaluation correspondent, selon le critère d'évaluation, à la valeur respective du deuxième paramètre de fonctionnement (B₂), et/ou **en ce que** les données d'évaluation correspondent, selon le critère d'évaluation, au degré respectif d'atteinte de points de fonctionnement optimaux ou critiques.

3. Machine de travail selon une des revendications précédentes, **caractérisée en ce que** le dispositif de calcul (5) représente graphiquement les données d'évaluation déterminées dans un endroit, dans le champ de données de fonctionnement (12), correspondant à la valeur respective du premier paramètre de fonctionnement (B₁).

4. Machine de travail selon une des revendications précédentes, **caractérisée en ce que** le dispositif de calcul (5) représente graphiquement les données d'évaluation déterminées en fonction de leur contenu, en particulier de leur valeur, graphiquement par l'intermédiaire d'une propriété de surface d'affichage différente, en particulier par une différence de couleur, de densité de couleur, de composition de couleur, de clarté, de motif ou analogue, dans un endroit, dans le champ de données de fonctionnement (12), correspondant à la valeur respective du premier paramètre de fonctionnement (B₁).

5. Machine de travail selon une des revendications précédentes, **caractérisée en ce que** le champ de données de fonctionnement (12) est représenté graphiquement sous forme de surface d'affichage, par exemple sous forme d'histogramme, dont l'extension dans une direction représente la zone de valeurs affichées, et **en ce que** le premier paramètre de fonctionnement (B₁) est représenté sous la forme d'un repère graphique (13), en particulier d'une aiguille, à l'intérieur du champ de données de fonctionnement (12).

6. Machine de travail selon la revendication 1, **caractérisée en ce que** le système de diagramme caractéristique (15) renferme un diagramme caractéristique (K₁) qui contient la relation entre l'efficience de traction (η) et le glissement (σ) pour différentes conditions de sol, et/ou **en ce que** le système de diagramme caractéristique (15) renferme un diagramme caractéristique (K₂) qui contient la relation entre l'efficience de traction (η) et le coefficient de traction (κ) pour différentes pression de pneumatiques.

7. Machine de travail selon la revendication 1 ou 6, **caractérisée en ce que** le premier paramètre de fonctionnement est le glissement (σ) entre au moins les éléments roulants d'entraînement (19) et le sol (22), ou **en ce que** le premier paramètre de fonctionnement (B₁) est l'efficience de traction (η) concernant la traction entre les éléments roulants d'entraînement (19) et le sol (22), ou **en ce que** le premier paramètre de fonctionnement (B₁) est un coefficient de traction (κ) concernant la traction entre les éléments roulants d'entraînement (19) et le sol (22), ou **en ce que** le premier paramètre de fonctionnement (B₁) est un coefficient de résistance au roulement (ρ) concernant la traction entre les éléments roulants (19) et le sol (22).

8. Machine de travail selon une des revendications 1 à 7, **caractérisée en ce que** le premier paramètre de fonctionnement (B₁) est le glissement (σ) concernant la traction entre les éléments roulants d'entraînement (19) et le sol (22), et **en ce que** le deuxième paramètre de fonctionnement (B₂) est l'efficience de traction (η) concernant la traction entre les éléments roulants d'entraînement (19) et le sol (22).

9. Machine de travail selon une des revendications 1 à 8, **caractérisée en ce que** le premier paramètre de fonctionnement (B₁) est le coefficient de traction (κ) concernant la traction entre les éléments roulants d'entraînement (19) et le sol (22), et **en ce que** le deuxième paramètre de fonctionnement (B₂) est l'efficience de traction (η) concernant la traction entre les éléments roulants d'entraînement (19) et le sol (22).

10. Procédé pour le fonctionnement d'une machine de travail agricole (1) selon la revendication 1, laquelle pour l'exécution d'un processus de travail agricole est exploitée dans un point de fonctionnement défini par des paramètres de fonctionnement, la machine de travail (1) comprenant un système d'assistance à la conduite (3) qui inclut une mémoire (4) pour enregistrer des données, un dispositif de calcul (5) pour le traitement des données enregistrées dans la mémoire (4), et une interface utilisateur graphique (6), le dispositif de calcul déterminant le point de fonctionnement respectivement instantané pendant l'exécution du processus de travail, le dispositif de calcul (5) représentant graphiquement par l'intermédiaire de l'interface utilisateur (6) un champ de données de fonctionnement (12) qui représente une zone de valeurs affichées pour un premier paramètre de fonctionnement (B₁), et représentant dans le champ de données de fonctionnement (12) la valeur instantanée pour le premier paramètre de fonctionnement (B₁), le dispositif de calcul (5) évaluant le premier paramètre de fonctionnement (B₁) par l'intermédiaire d'au moins une partie de la zone de valeurs affichées selon un critère d'évaluation qui concerne un deuxième paramètre de fonctionnement (B₂), en ce que dans la mémoire (4) est enregistré un système de diagramme caractéristique (15) qui contient des relations entre au moins une partie des paramètres de fonctionnement, et en ce que le dispositif de calcul (5) effectue l'évaluation du premier paramètre de fonctionnement (B₁) sur la base d'une relation contenue dans le système de diagramme caractéristique (15) entre le premier paramètre de fonctionnement (B₁) et le deuxième paramètre de fonctionnement (B₂) et représente graphiquement les données d'évaluation ainsi déterminées dans le champ de données de fonctionnement (12), la machine de travail (1) comportant un groupe propulseur (18) et au moins deux éléments roulants d'entraînement (19), en particulier des roues motrices (20) ou des chenilles motrices, qui sont entraînés par le groupe propulseur (18) pour générer une traction par rapport au sol (22), et le premier paramètre de fonctionnement (B₁) concernant la traction entre les éléments roulants d'entraînement (19) et le sol (22), et le dispositif de calcul représentant dans le champ de données de fonctionnement (12) qu'en modifiant un troisième paramètre de fonctionnement (B₃) on peut provoquer une modification du premier paramètre de fonctionnement (B₁), préférentiellement en ce que le dispositif de calcul (5) détermine sur la base du système de diagramme caractéristique (15) quelle modification qualitative du troisième paramètre de fonctionnement (B₃) conduit à quelle modification qualitative du premier paramètre de fonctionnement (B₁) et le représente dans le champ de données de fonctionnement (12), le troisième paramètre de fonctionnement (B₃) concernant le lestage de la machine de travail (1).

11. Procédé selon la revendication 10, **caractérisé en ce que** le dispositif de calcul (5) détermine en fonction du processus de travail le premier paramètre de fonctionnement B₁, le deuxième paramètre de fonctionnement B₂ et le cas échéant le troisième paramètre de fonctionnement B₃ et, sur la base de cette définition, représente graphiquement le champ de données de fonctionnement (12), évalue le premier paramètre de fonctionnement (B₁) et représente graphiquement dans le champ de données de fonctionnement (12) les données d'évaluation déterminées.

12. Procédé selon la revendication 11, **caractérisé en ce que** le dispositif de calcul (5) détermine ou paramètre en fonction du processus de travail le système de diagramme caractéristique (15), en particulier le sélectionne à partir d'une pluralité de systèmes de diagrammes caractéristiques enregistrés dans la mémoire (4).
